# EUROPEAN PATENT APPLICATION

(11) **EP 4 644 943 A1**
(43) Date of publication of application: **05.11.2025**
(21) Application number: 24275055.2
(22) Date of filing: 02.05.2024
(51) Int. Cl.: G01S 7/00, H01Q 1/34, B63B 35/00

(54) **IMPROVEMENTS IN AND RELATING TO RADAR SYSTEMS**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Disclosed is a maritime vessel configured to be deployed from a mothership, comprising a RADAR, wherein data from the RADAR is transmitted to a remote location for aggregation with other RADAR data to thereby extend overall RADAR coverage of an area.

## Description

### FIELD

The present invention relates to RADAR systems. It particularly applies to RADAR systems mounted aboard maritime vessels and, more particularly, to maritime vessels suitable for use in the littoral zone i.e. in the vicinity of the shore.

### BACKGROUND

It is known to provide smaller craft which can be launched from a larger craft (a mother ship), so that the larger craft can remain a certain distance from the shore and the smaller craft is able to enter the littoral zone for landing or commando insertion purposes.

The smaller craft operate autonomously and, having offloaded, return to the mother ship. Usually, the smaller craft have limited RADAR capabilities, since these are not normally a key requirement for such vessels.

However, there is an ever evolving need to increase capability and it is an aim of embodiments of the present invention to improve the capabilities of the maritime vessels referred to previously.

### SUMMARY

According to a first aspect of the present invention, there is provided a maritime vessel configured to be deployed from a mothership, comprising a RADAR, wherein data from the RADAR is transmitted to a remote location for aggregation with other RADAR data to thereby extend overall RADAR coverage of an area.

In an embodiment, the vessel RADAR is arranged to be demountable from the vessel.

In an embodiment, the RADAR is provided in modular form with a first module comprising an antenna is arranged for mounting atop the vessel and a second module comprising a processor, is arranged for mounting within the vessel.

In an embodiment, the RADAR is an Active Electronically Scanned Array, AESA, RADAR.

In an embodiment, the RADAR is additionally provided with Electro-optic/Infra Red, EO/IR, sensors.

In an embodiment, the remote location is the mothership.

According to a second aspect of the present invention, there is provided a system comprising a mothership and at least one maritime vessel according the first aspect.

In an embodiment, the system further comprises a Combat Management System, CMS, arranged to aggregate RADAR data from the maritime vessel with RADAR data from the mothership to effectively extend the range of coverage of a RADAR on the mothership.

In an embodiment, the aggregated RADAR data is transmitted to the at least one maritime vessel.

According to a third aspect of the present invention, there is provided a method of extending a range of a RADAR on a mothership by receiving RADAR data from at least one maritime vessel remote from the mothership and aggregating the received RADAR data with data from a RADAR on the mothership.

### BRIEF DESCRIPTION OF THE FIGURES

Embodiments of the invention will now be described by way of example only with reference to the figures, in which:
Figure 1 shows a typical scenario in the littoral zone;
Figure 2 shows a sample display from the CMS according to an embodiment of the invention;
Figure 3 shows a schematic representation of certain hardware elements according to an embodiment of the invention; and
Figure 4 shows a flowchart according to an embodiment of the invention.

### DETAILED DESCRIPTION

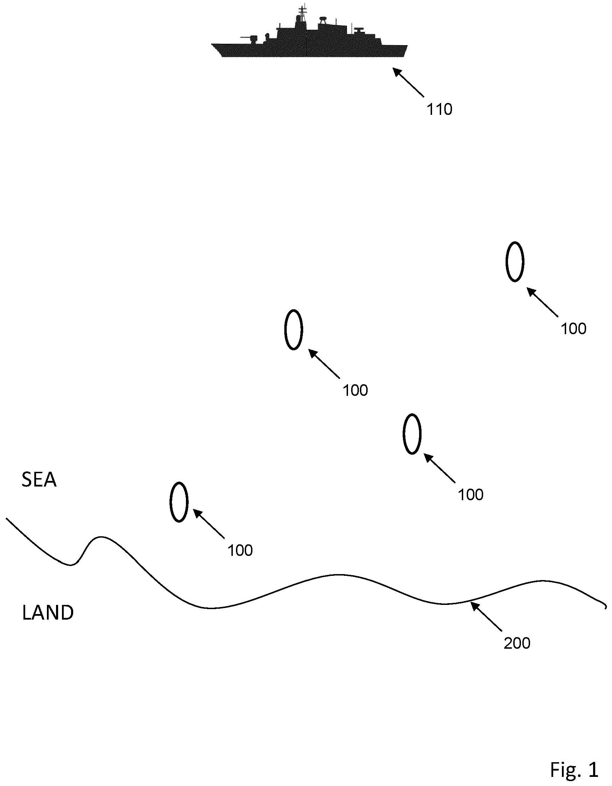

Figure 1 illustrates a scenario in the littoral zone. A mothership 110 is located some distance (e.g. 100-150 Nautical Miles) away from the shore 200. The mothership 110 has deployed a plurality of landing craft or Littoral Strike Craft 100, hereafter LSC. These LSC 100 are equipped to deliver personnel or supplies and equipment from the mothership 110 to the shore 200, unload and return to the mothership 110.

Whilst away from the mothership, the LSC 100 are relatively vulnerable. They are typically configured for speedy travel to unload and return. They are not typically provided with complex defences such as RADAR and heavy weaponry. However, a navigational RADAR may be provided, but not usually a RADAR of the type which is used to detect and/or track threats.

An LSC 100 according to an embodiment of the invention is provided with a RADAR arranged to project anti-air/surface warfare capability into the littoral zone. This is achieved by fitting the LSC 100 with a lightweight Active electronically scanned array (AESA) RADAR. This type of RADAR has the advantage of having a relatively low topside weight, suitable for fitting to a relatively lightweight craft, such as an LSC 100. The active electronics and processing modules can be deployed lower in the vessel, such as below deck.

The RADAR may be further equipped with Electro-optic/Infra Red (EO/IR) sensors to further enhance capabilities.

The output data from the RADAR can be supplied locally to personnel on the LSC 100 so that possible threats can be assessed locally. However, a key advantage of an embodiment of the invention is the ability to transmit the data generated at the local RADAR on the LSC back to the mothership 110 and/or to another vessel in the task group, so that the receiving vessel is able to piece together a fuller picture of the environment.

A typical scenario might involve a plurality of LSC 100 at different locations, each transmitting data back to a central processor in the task group. The central processor may take the form of a combat management system, which is arranged to draw inputs from a variety of sources/sensors, not just RADAR. However, unlike prior art systems, the sensors from which inputs are drawn extend well beyond the larger vessels in the task group. This permits greater RADAR coverage of the area of interest and extends well into the littoral zone, from where data was usually scarce or non-existent in prior art systems.

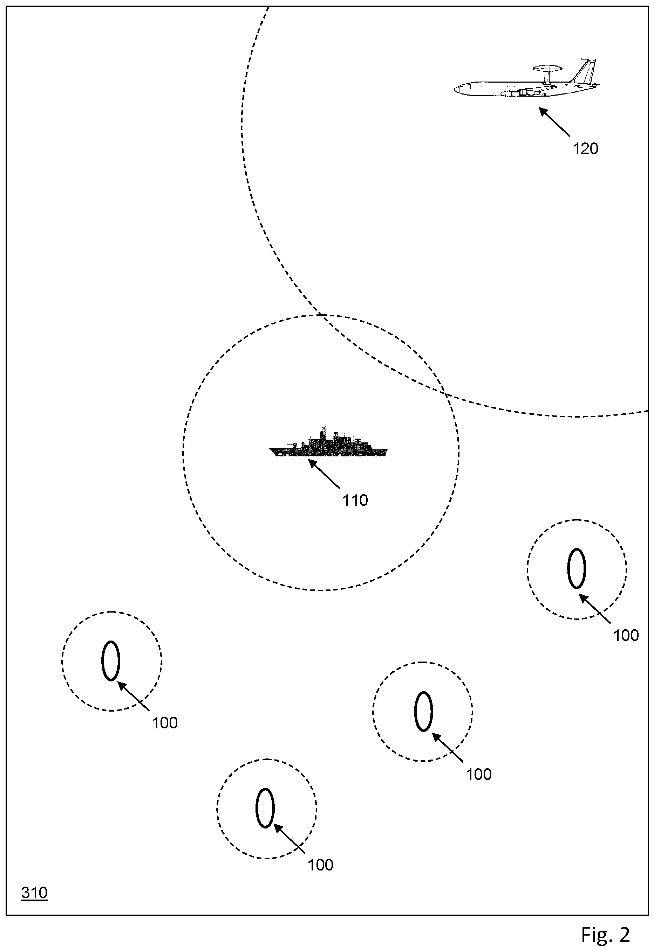

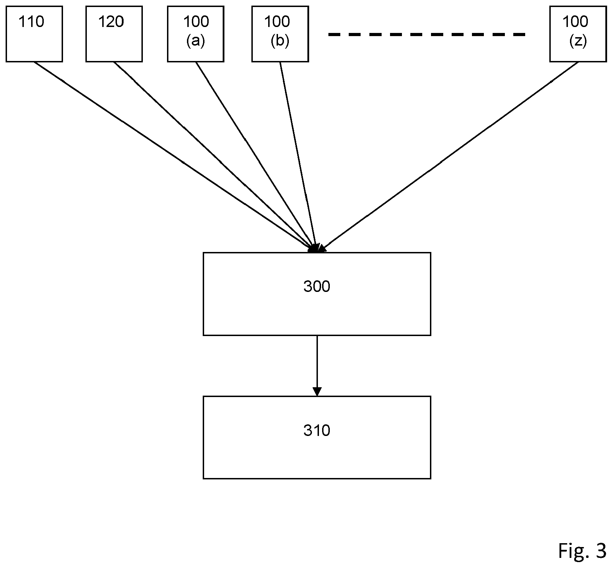

Figure 2 shows a representation of a display from a combat management system and Figure 3 shows a representation of a combat management system (CMS) 300, associated display and a plurality of inputs.

Figure 2 shows a representative display from a display 310 associated with a combat management system 300. The CMS 300 may be located, for instance on the mothership 110 or another vessel located within or near the task group. It could alternatively be located on an aircraft or on land. The exact location is unimportant. The ability to source data from a variety of sources and/or locations is a key feature.

In Figure 2, each possible source of sensor data is indicated surrounded by a dotted line indicative of the extent of coverage of the associated sensor e.g. RADAR. In other words, the dotted circle around mothership 110 indicates the extent of its RADAR coverage. The dotted arc around surveillance aircraft AWACS 120 indicates the extent of its RADAR coverage. The dotted circle surrounding each LSC 100 indicates the extent of its RADAR coverage.

The individual data received from each source is aggregated at the CMS 300 and then displayed in a form which effectively expands the coverage of the area of interest.

Figure 3 illustrates a number of inputs, identified by the craft or vessel with which they are associated, namely mothership 110, AWACS 120 and a plurality (labelled (a) to (z)) of LSC 100.

The data from the sensors on each vessel or craft is transmitted in an agreed format back to the CMS 300, where the individual results are aggregated for analysis and display on a display 310. The data from the RADAR is augmented with data relating to the position of the LSC 100 at the time the RADAR data was generated. This allows the CMS to accurately locate the LSC at the correct position.

An incoming threat to the mothership could, in the absence of the increased range offered here, only be detected once it entered the zone indicated by the dotted circle surrounding the mothership 110, by which time, it may be more difficult or even impossible to deploy countermeasures.

However, in the scenario depicted in Figure 2, an incoming threat which passes through the coverage area of any one of the LSC 100 or the AWACS 120, is detected, tracked and the resultant data is transmitted to the CMS 300, giving a possibly much earlier warning of the threat so that there is a greater chance of deploying effective countermeasures.

The dataflow, which has been described in a one-way fashion, can actually be two-way. This means that the information displayed on display 310 at the central location can be transmitted to any other location, including the individual LSC 100. This can give the smaller craft valuable information about possible threats that they may face, allowing them to take evasive action. This may be particularly important for these smaller craft which are not typically equipped with extensive weaponry.

In practice, not all LSC in a particular scenario will need to be fitted with its own RADAR and so it is generally sufficient for only some of a given plurality of LSC to be equipped with a RADAR. The exact number in any particular scenario will depend on the particular needs of the deployment, likely threats, environment or any one of a range of other factors.

The RADAR fitted to any LSC 100 is effectively provided in modular form with a first antenna array module mounted atop the LSC and a second processor module mounted below deck or at least lower in the vessel. The two modules are connected for power and data transfer by means of a suitable cable or cables. For instance, power may be carried separately from the data, which may be carried via a fibre optic link.

By providing a modular, demountable, RADAR system, it is possible to customise the LSC to suit the environment.

The preceding description assumes that the plurality of LSC 100 are all disposed between the mothership 110 and the shore 200. However, this is not necessarily so. In some scenarios, it may be desirable to launch a plurality of LSC in a number of different directions, substantially encircling the mothership 110. In this way, especially if there is overlap of the individual coverage areas of each LSC 100, the RADAR coverage offered to the mothership 110 can be extended beyond that which is possible if relying upon the RADAR of the mothership alone. In such a scenario, the LSC is effectively acting merely as a "slave" unit to the mothership RADAR and may have no secondary function, such as troop or equipment delivery. It may be that an LSC 100 in such a role is operated autonomously, as a drone, controlled from the mothership 110.

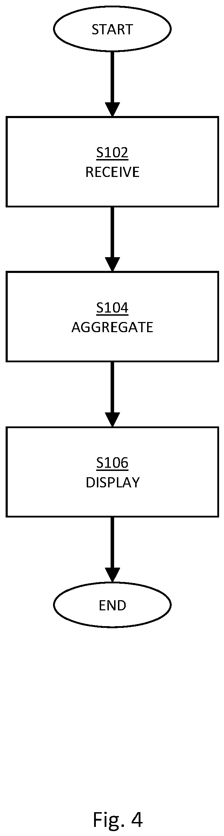

Figure 4 shows, for completeness, a representation of a method according to an embodiment of the present invention. At S102, signals from a plurality of RADARs are received at the CMS 300. At step S104, the plurality of signals are aggregated to yield an aggregated dataset representing RADAR coverage over an extended area. At S106, the aggregated data is displayed on display 310 in a manner which gives an extended view of an area of interest.

By means of an embodiment of the present invention, it is possible to effectively extend a range of operation of a mothership RADAR by providing one or more associated but separate craft, equipped with suitable RADAR capabilities, with each of the remote RADARs sending data back to a central point (perhaps, but not necessarily) the mothership 110, where the received data is aggregated and displayed.

## Claims

1. A maritime vessel configured to be deployed from a mothership, comprising a RADAR, wherein data from the RADAR is transmitted to a remote location for aggregation with other RADAR data to thereby extend overall RADAR coverage of an area.

2. The vessel according to claim 1, wherein the vessel RADAR is arranged to be demountable from the vessel.

3. The vessel according to claim 2, wherein the RADAR is provided in modular form with a first module comprising an antenna is arranged for mounting atop the vessel and a second module comprising a processor, is arranged for mounting within the vessel.

4. The vessel according to any preceding claim wherein the RADAR is an Active Electronically Scanned Array, AESA, RADAR.

5. The vessel of any preceding claim wherein the RADAR is additionally provided with Electro-optic/Infra Red, EO/IR, sensors.

6. The vessel of any preceding claim wherein the remote location is the mothership.

7. A system comprising a mothership and at least one maritime vessel according any one of the preceding claims.

8. The system of claim 7 further comprising a Combat Management System, CMS, arranged to aggregate RADAR data from the maritime vessel with RADAR data from the mothership to effectively extend the range of coverage of a RADAR on the mothership.

9. The system of claim 8 wherein the aggregated RADAR data is transmitted to the at least one maritime vessel.

10. A method of extending a range of a RADAR on a mothership by receiving RADAR data from at least one maritime vessel remote from the mothership and aggregating the received RADAR data with data from a RADAR on the mothership.
